# EUROPEAN PATENT SPECIFICATION

(11) **EP 0 765 824 B1**
(45) Date of publication and mention of the grant of the patent: **22.03.2000**
(21) Application number: 95115369.1
(22) Date of filing: 29.09.1995
(51) Int. Cl.: B65G 1/00, A47B 47/02, A47B 96/00, F16B 12/38

(54) **Shelving system**
Regalsystem
Système d'étagères

(43) Date of publication of application: 02.04.1997
(73) Proprietor: LOSEY LTD, Nicosia (CY); TORRI S.p.A., 36040 Torri di Quartesolo (Vicenza) (IT)
(72) Inventor: Bozzone, Amedeo, 98000 Monaco (MC)
(74) Representative: Lanzoni, Luciano

(56) References cited:
- GB-A- 1 057 526
- GB-A- 2 148 100
- US-A- 3 625 372
- US-A- 4 391 545

## Description

The present invention relates to a shelving system for warehouses or the like.

In more detail, the invention refers to metallic shelving including vertical up-rights which support, at a pre-fixed height, a plurality of transverse supporting elements, capable of being assembled as required, to which it is possible to couple shelves or the like. This shelving allows the variation, with great facility, of both the extension thereof in a longitudinal, transverse direction, and of the distance, in a vertical direction, between one shelf and another.

Shelving of this type is also used to make big self-supporting warehouses in which the trellis structure of the shelving supports directly the lateral walls and the overhead covering of the building. This solution presents the advantage of significantly reducing the manufacturing costs because it makes the best of the available soil surface and the available volume and additionally eliminates the costs relating to the construction of the building. The warehouse made in this way must be able to sustain, in addition to the weight of the stored material, the weight of the covering pre-fab panels, and must also be able to withstand the external stresses due to, for example, the weight of snow deposited on the roof or to the force of the wind acting on the covering panels.

GB 2.148.100A discloses all the features of the preamble of claim 1.

The prior art envisages shelving of particular robustness being capable of supporting such stresses. Prior art shelving is constituted by bolted or soldered shoulders .made with two identical pressed steel up-rights connected with each other by diagonals and cross-pieces to which the stringers are attached. This is a mixed solution wherein the cross-pieces and diagonals are soldered or bolted to the up-rights to form the shoulders while the stringers are attached to the up-rights by means of specially pre-formed brackets. The up-rights are substantially "C" shaped and show a plurality of frontal notches for the attachment of the stringers and of lateral holes for fixing, by means of bolts, the diagonals and cross-pieces. The section of such up-rights is generally symmetrical and the notches and lateral holes equidistant from each other.

The up-rights constructed according to this prior art technique present therefore, a multitude of holes and notches which, apart from weakening the structure, are the source of uneconomical working residues.

In the prior art technique the diagonals and the cross-pieces are connected to the up-rights by means of bolts that cross the drilled walls of the up-rights from one side to the other.

The shoulders of the shelving constructed according to this prior art technique present therefore the drawback of not being particularly rigid and robust in themselves.

A further drawback of this solution is connected to the difficulty encountered during the assembly thereof in order to exactly align the holes of the up-right with the holes effected in the diagonals or in the cross-pieces. The play of the bolts in the holes is in fact extremely limited in order not to excessively weaken the up-right. The centring thus requires a certain level of skill on the part of the operator.

In the case of the assembly of shelving for the making of the above mentioned self-supporting warehouses this drawback appears more clearly since the assembly may require the intervention of assembly workers at great heights which render their job extremely difficult.

Finally, even only the provisional assembly of a diagonal or of a cross-piece requires at least the insertion of the bolt in the holes before the assembly workmen are able to have both hands free.

Also in prior art techniques the shoulders of the shelving are made by soldering the extremities of the diagonals or the extremities of the cross-pieces directly to the up-rights. This solution, although being extremely rigid, still presents the notable drawback of requiring assembly in the factory, at least in part, of the shoulders.

Such pre-assembly however, increases significantly the dimensions of the elements to be packed for transport to the place of final assembly. Such increase in dimensions is obviously reflected very negatively in the transport costs.

The aim of the present invention is thus that of eliminating the above-mentioned drawbacks.

The invention, characterised by the claims which follow, resolves the problem of supplying an extremely robust and stable shelving system which can be made up and assembled in a rational and economical manner.

A further aim of the present invention is to envisage the manufacture of up-right whose thickness is smaller than that of the up-rights constructed according to prior art techniques with the same carrying capacity and overall dimensions.

It is also an aim of the invention to ensure a coupling between the up-right and the diagonals or cross-pieces which is achieved by trapping the same without necessarily requiring the insertion of bolts or the like.

A further aim of the present invention is that of supplying a coupling which can be used equally both for connecting the up-right with the horizontal cross-pieces and for connecting the up-right with the inclined diagonals. It is thus a coupling rotatable about an axis substantially horizontal thanks to which it is possible to assemble cross-pieces or diagonals in such a way that the angle formed between the cross-pieces or the diagonals and the up-right can vary within a range comprised between 0 and 180 degrees.

A further aim is that of being able to use cross-pieces and diagonals the same being differentiated from each other solely through the different function thereof and the different lengths thereof but being obtained through the same manufacturing process therefor.

A further aim is that of providing a coupling between the up-right and the diagonals or the cross-pieces, the same being easy to assemble and not weakening the structure of the up-right.

A still further aim of the present shelving system, finally, is that of limiting the generation of working residues.

From a manufacturing point of view, the shelving system, the subject matter of the present invention as defined in claim 1, comprises at least two active portions counter-shaped one with the other and coupled respectively to the up-right and to the diagonals or to the cross-pieces to connect the up-right to the cross-pieces or to the diagonals.

The contact surface of the two active portions is preferably substantially shaped in the form of a funnel.

Advantageously, it is envisaged that the active portions have holes in them in order to take a blocking rivet or a blocking bolt.

Also advantageously, the second active portion presents a projecting extremity with respect to a corresponding extremity of the first active portion. By deforming the projecting extremity of the second active portion it is possible to block firmly the connection. In this way, the internal second active portion also acts as a rivet.

Thanks to this particular arrangement, it is thus possible to obtain an extremely simple to assemble and economical shelving system resolving in a safe and compact way the function of sustaining even very substantial loads.

In particular, this solution eliminates completely the material residues due to the effecting of the holes in the up-right, exploiting, on the contrary, such residues in order to make the structure more rigid.

Further advantages and characteristics of the present invention will become more evident in the detailed description which follows, made with reference to the accompanying drawings which represent a form of the embodiment thereof being purely by way of non-limiting example in which:
Figure 1 shows a perspective view of the coupling between the up-right and two bars;
Figure 2 shows a perspective view of a constructive variation between the up-right and two bars;
Figure 3 shows a section taken across the up-right;
Figure 4 shows an enlarged perspective view of the extremity of one bar of Fig. 1,
Figure 5 shows an enlarged perspective view of the coupling between the up-right and one bar;
Figure 6 shows a section taken across two active portions inserted one inside the other.

With reference to the appended figures and drawings, 1 denotes a pressed steel up-right the same being substantially vertical.

The section of the up-right 1 is substantially "C" shaped and includes a frontal wall 2 and two lateral walls 3, parallel and symmetrical with each other.

The up-right 1 presents a plurality of first active portions 9 located along the lateral walls 3, for the connection with bars 7 to make shoulders (not illustrated).

The bars 7 present, as is clearly evident in Figure 4, a second active portion 10, positioned close to one of the extremities 4 thereof and counter-shaped with respect to the first active portion 9.

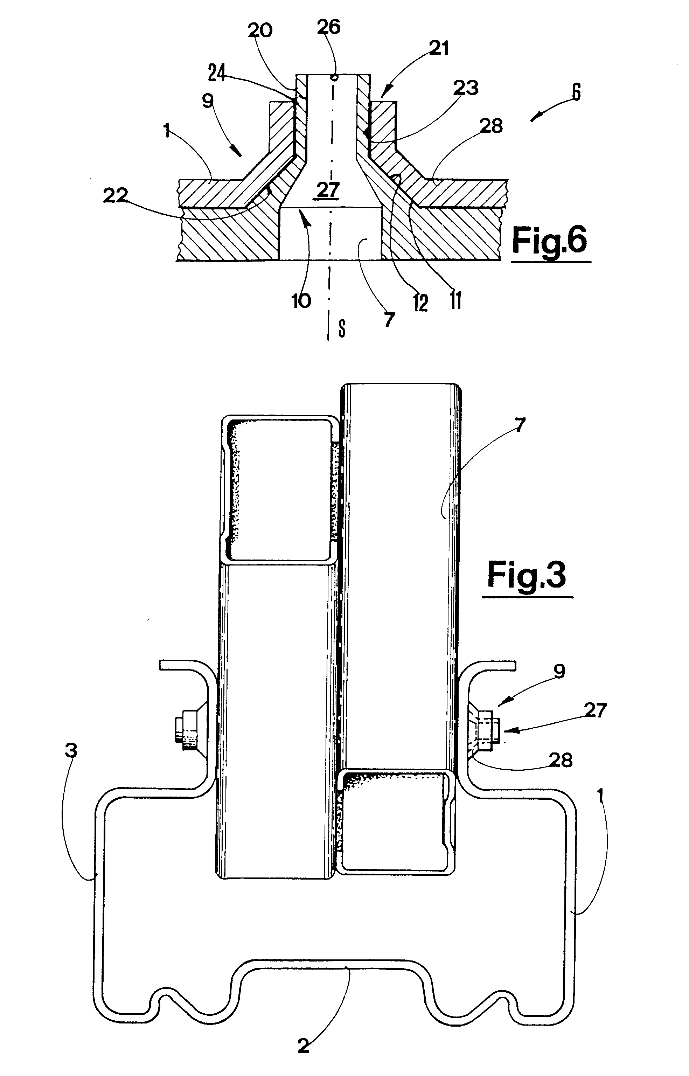

The coupling of the two active portions 9, 10 is illustrated in Figure 5 and 6 from which it is clear that the coupling occurs by inserting the second active portion 10, constrained to the bar 7, inside the first active portion 9.

The first active portion 9 comprises substantially a reinforcing ring 28 having a first hole 27 shaped as a funnel. Such first active portion 9 comprises in particular, a first contact surface 22 in the shape of a truncated cone or hemisphere which is connected with a second cylindrical contact surface 23. The contact surface in the shape of a truncated cone presents the enormous advantage of being self-centring during the assembly phase and also allows the elimination of possible lateral play, due to differences in the sizes of the active portions 9, 10 between the same.

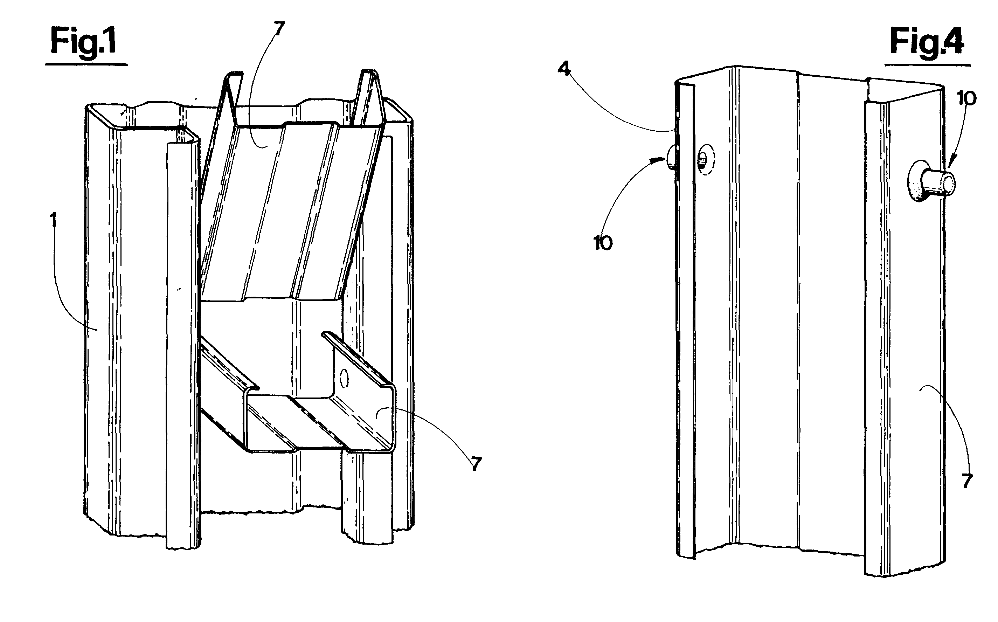

In prior art techniques such play is eliminated by means of soldering. It is to be noted that both the contact surfaces 22 and 23 are shaped according to geometrical forms which are symmetrical with respect to an axis of symmetry S. This configuration ensures a coupling rotatable about the axis S which allows the positioning of the bars 7 inclining the same as desired, for example, as illustrated in Figure 1.

The first active portion 9 is effected preferably by means of drawing of the up-right 1. This procedure, as well as being simple and economical to effect, notably limits the weakening of the up-right 1 due to the presence of the first holes 27.

In Figure 5 it is also clearly visible that the internal second active portion 10, projects slightly with respect to an extremity 21 of the first active portion 9. This particular configuration allows the reciprocal blocking of the two active portions 9, 10 by permanently deforming a projecting extremity 20 of the second active portion 10 until it projects over an internal edge 24 of the first active portion 9. The deformation is effected in a known way.

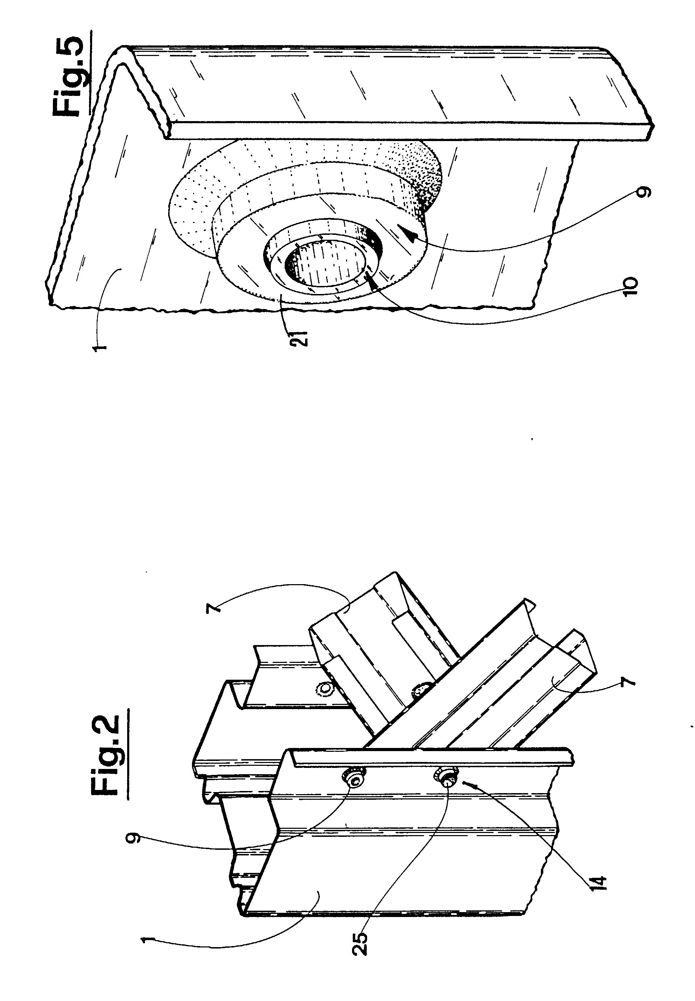

Alternatively, it is also possible to block reciprocally the two active portions 9, 10 by inserting a rivet 25 (see Figure 2) or else a bolt (not illustrated) in a second hole 26 of the second active portion 10.

Figure 1 shows an example of the make up of the present invention in which the bars 7 present two pairs of active portions 9, 10 aligned to and facing each other.

The most obvious advantage obtained with this solution is that of the speed of assembly of the bars 7 to the up-rights 1. Such assembly requires in fact that the bar 7 be simply inserted in the up-right 1 in such a way as to make the pairs of active portions 9, 10 coincide with each other by means of the rotation of the bar 7.

This operation widens a little the lateral walls 3 of the up-right 1, when the bar 7 is inserted, the up-right 1 closes itself by elasticity imprisoning the bar 7 itself.

The funnel-shaped configuration of the active portions 9, 10 makes the assembly significantly easier since ensuring a self-centring of the two pairs of active portions 9, 10.

It is to be noted that the alignment of the two active portions 9,10 is almost automatic and does not require any particular skill on the part of the assembly workman who simply needs to rotate the bar 7 after having brought together, as closely as possible, the two active portions 9, 10. In addition, at the end of the rotation, the coupling is self sustaining and does not require support from the workman to proceed to the final blocking, by means of the insertion of a rivet 25 or by means of the partial deformation of the projecting extremity 20.

It is to be noted the extreme simplicity of the assembly which does not require for the workman, any tool or even the presence of bags or the like containing possible blocking elements, indispensable in contrast, with the assembly according to prior art techniques.

Figure 2 shows an alternative solution which envisages the presence of only one pair of active portions 9, 10 for coupling the bar 7 to the up-right 1. In this second case it is to be noted that the adoption of a blocking element is indispensable, such as the rivet 25 or the riveting of the projecting extremity 20.

However, even in this second case, the presence of the active portions 9, 10 notably facilitate the assembly since it eliminates completely any problem of centring.

It is also to be noted that, unlike prior art shelving, the structure of the up-right 1 is not weakened by the presence of the first active portions 9. Indeed, the material which would be normally considered as working residues is here employed in an extremely rational way and contributes to the strengthening of the up-right 1. For this reason the uprights made according to the present invention can be made, with the same dimensions and resistance, with material which is thinner with respect to that employed in prior art techniques.

The saving in terms of materials obviously makes itself felt as well in the economical nature of the solution described here.

With the present invention it is therefore possible to make extremely robust shelving which can be assembled in an extremely effective and economical way.

The present invention is susceptible to numerous variations or changes without falling outside the scope of the present invention.

## Claims

1. A metallic shelving system comprising:
- at least one up-right (1) substantially vertical, formed by a frontal wall (2) and at least two lateral walls (3);
- at least one bar (7);
- connecting means (6) placed between the up-right (1) and the bar (7) for the coupling of the bar (7) to the up-right (1) so that the bar (7) can revolve, at least partially, with respect to the up-right (1),
**characterised in that** said connecting means (6) comprise at least a first active portion (9) coupled to the up-right (1) including a first self-centring contact surface (22), into which a second active portion (10) coupled to the bar (7) can be inserted by widening lateral walls (3) of the up-right (1) which close itself by elasticity, said active portions (9, 10) beeng reciprocally counter-shaped and each having a contact surface (11, 12) symmetrical with respect to a same axis of symmetry (S).

2. Shelving system as in claim 1, characterised in that said self-centering surface (22) is hemispherical or has the form of a truncated cone.

3. Shelving system as in claim 1, characterised in that said active portions (9, 10) each comprise at least one contact surface (11, 12) shaped in the form of a funnel.

4. Shelving system as in one of the preceding claims, characterised in that said active portions (9, 10) present a first hole (27) capable of housing blocking means (14).

5. Shelving system as in claim 4, characterised in that said blocking means (14) include a rivet (25).

6. Shelving system as in claim 1, characterised in that said second active portion (10) presents an extremity (20) projecting with respect to a corresponding extremity (21) of the first active portion (9).

7. Shelving system as in claim 6, characterised in that the reciprocal blocking of the active portions (9, 10) is effected by means of permanent deformation of said projecting extremity (20) beyond an internal edge (24) of the extremity (21) of the first active portion (9).

## Patentansprüche

1. Regalsystem aus Metall enthaltend:
- wenigstens einen im wesentlichen vertikalen Ständer (1), gebildet aus einer frontalen Wand (2) und aus wenigstens zwei Seitenwänden (3);
- wenigstens einen Träger (7);
- Verbindungsmittel (6), die zwischen dem Ständer (1) und dem Träger (7) angeordnet sind, um den Träger (7) an dem Ständer (1) zu befestigen, so dass der Träger (7) wenigstens teilweise im Verhältnis zu dem Ständer (1) gedreht werden kann;
**dadurch gekennzeichnet,** dass die genannten Verbindungsmittel (6) wenigstens einen ersten aktiven Abschnitt (9) enthalten, angeschlossen an den Ständer (1) und eine erste selbstzentrierende Kontaktfläche (22) enthaltend, in welche ein zweiter, an den Träger (7) angeschlossener aktiver Abschnitt (10) eingesetzt werden kann, und zwar durch Aufweiten der Seitenwände (3) des Ständers (1), welcher sich durch Elastizität selbst schliesst, wobei die genannten aktiven Abschnitte (9, 10) gegenseitig zueinander passrecht geformt sind und jeder eine Kontaktfläche (11, 12) aufweist, die symmetrisch im Verhältnis zu einer gleichen Symmetrieachse (S) verläuft.

2. Regalsystem nach Patentanspruch 1, **dadurch gekennzeichnet,** dass die genannte selbstzentrierende Kontaktfläche (22) halbkugelförmig ist oder die Form eines Stumpfkegels hat.

3. Regalsystem nach Patentanspruch 1, **dadurch gekennzeichnet,** dass die genannten aktiven Abschnitte (9, 10) jeweils wenigstens eine Kontaktfläche (11, 12) aufweisen, ausgebildet in Form eines Trichters.

4. Regalsystem nach einem der vorstehenden Patentansprüche, **dadurch gekennzeichnet,** dass die genannten aktiven Abschnitte (9, 10) eine erste Bohrung (27) aufweisen, geeignet zur Aufnahme von Befestigungsmitteln (14).

5. Regalsystem nach Patentanspruch 4, **dadurch gekennzeichnet,** dass die genannten Befestigungsmittel (14) aus einem Niet (25) bestehen.

6. Regalsystem nach Patentanspruch 1**, dadurch gekennzeichnet,** dass der genannte zweite aktive Abschnitt (10) ein Ende (20) aufweist, das im Verhältnis zu einem entsprechenden Ende (21) des ersten aktiven Abschnittes (9) hervorsteht.

7. Regalsystem nach Patentanspruch 6, **dadurch gekennzeichnet,** dass die gegenseitige Befestigung der aktiven Abschnitte (9, 10) mit Hilfe der dauerhaften Verformung des genannten hervorstehenden Endes (20) hinter einem internen Rand (24) des Endes (21 des ersten aktiven Abschnittes (9) erfolgt.

## Revendications

1. Un système d'étagères métalliques comprenant:
- au moins un montant (1) substantiellement vertical, constitué d'une paroi frontale (2) et d'au moins deux parois latérales (3);
- au moins une barre (7);
- des moyens de liaison (6) placés entre le montant (1) et la barre (7) pour l'accouplement entre la barre (7) et le montant (1) de manière à ce que la barre (7) puisse pivoter, au moins partiellement, par rapport au montant (1),
caractérisé en ce que les moyens de liaison (6) comprennent au moins une première portion active (9) accouplée au montant (1) et comprenant une première surface de contact auto-centrante (22) dans laquelle une seconde portion active (10), accouplée à la barre (7), peut être insérée en élargissant les parois latérales (3) du montant (1) qui se referment par élasticité, lesdites portions actives (9, 10) étant de formes complémentaires et chacune d'entre elles ayant une surface de contact (11, 12) symétrique par rapport à un même axe de symétrie (S).

2. Système d'étagères selon la revendication 1, caractérisé par le fait que ladite surface auto-centrante (22) a une forme hémisphérique ou en tronc de cône.

3. Système d'étagères selon la revendication 1, caractérisé par le fait que lesdites portions actives (9, 10) comprennent chacune au moins une surface de contact (11, 12) ayant la forme d'un entonoir.

4. Système d'étagères selon l'une des revendications précédentes, caractérisé par le fait que lesdites portions actives (9, 10) présentent un premier orifice (27) capable de loger des moyens de blocage (14).

5. Système d'étagères selon la revendication 4, caractérisé par le fait que lesdits moyens de blocage (14) comprennent un rivet (25).

6. Système d'étagères selon la revendication 1, caractérisé par le fait que ladite seconde portion active (10) présente une extrémité (20) saillante par rapport à une extrémité (21) correspondante de la première portion active (9).

7. Système d'étagères selon la revendication 6, caractérisé par le fait que le blocage réciproque des portions actives (9, 10) est effectué au moyen d'une déformation permanente de ladite extrémité saillante (20) au-delà d'un bord interne (24) de l'extrémité (21) de la première portion active (9).
